# EUROPÄISCHE PATENTSCHRIFT

(11) **EP 3 341 244 B1**
(45) Veröffentlichungstag und Bekanntmachung des Hinweises auf die Patenterteilung: **26.05.2021**
(21) Anmeldenummer: 16756683.5
(22) Anmeldetag: 23.08.2016
(51) Int. Cl.: B60N 3/06

(54) **FUSSSTÜTZE FÜR EIN KRAFTFAHRZEUG**
FOOT REST FOR A MOTOR VEHICLE
REPOSE-PIED POUR VÉHICULE AUTOMOBILE

(30) Priorität: 27.08.2015 DE 102015216410
(43) Veröffentlichungstag der Anmeldung: 04.07.2018
(73) Patentinhaber: Volkswagen Aktiengesellschaft, 38440 Wolfsburg (DE)
(72) Erfinder: SCHILLER, Dirk, 29229 Celle (DE)
(86) Internationale Anmeldenummer: PCT/EP2016/069854
(87) Internationale Veröffentlichungsnummer: WO 2017/032759

(56) Entgegenhaltungen:
- DE-A1-102007 052 568
- US-A- 1 839 604
- US-A1- 2014 001 787

## Beschreibung

Die Erfindung betrifft eine Fußstütze für ein Kraftfahrzeug zum Abstützen eines Fußes eines Fahrzeuginsassen, mit einem Basisteil und einer Fußauflage, wobei die Fußauflage relativ zum Basisteil bei einem Unfall verschiebbar ist.

Aus der EP 1 033 281 A1 ist eine gattungsgemäße Fußstütze bekannt, die ausschließlich für eine Anordnung an einem Radhaus vorgesehen ist. Sie erfordert einen verhältnismäßig komplizierten, mit Federelementen versehenen Rollenmechanismus, damit die Fußstütze bei einem Unfall verschoben werden kann, um die Verletzungsgefahr für die Fahrzeuginsassen zu reduzieren. Ferner ist die Montage der Fußstütze an einer Fahrzeugkarosserie aufwändig. Insgesamt ist die bekannte Fußstütze somit kostspielig.

Eine andere Fußstütze für ein Kraftfahrzeug ist in der DE 198 58 636 A1 beschrieben. Die Druckschrift offenbart eine Sicherheitseinrichtung für ein Kraftfahrzeug, mit einer beweglich in einem vorderen Fußraum des Kraftfahrzeugs montierbaren Fußablage, die bei einem Aufprall des Kraftfahrzeugs entgegen der Fahrtrichtung verlagert wird. Die Fußablage wird bei einer Intrusion der Begrenzungswand in den Fußraum durch eine von der intrudierenden Begrenzungswand auf die Fußablage ausgeübte Kraft nach hinten verlagert.

Die US 2014/001787 A1 offenbart eine Fußstütze zur Absorption von kinetischer Energie bei einem Unfall. Das Absorptionsvermögen der Fußstütze kann individuell eingestellt werden. Aus der DE 10 2007 052568 A1 ist eine Dämpfungsplatte zum Schutz der unteren Extremitäten eines Fahrzeuginsassen bekannt. Diese stellt bei einem Unfall erhöhte schützende Dämpfungseigenschaften bereit.

Ferner ist aus der US 1 839 604 A eine Fußauflage bekannt, auf der man bei einem Schuhputzer oder bei einer Schuhanprobe in einem Schuhgeschäft einen Fuß aufstellen kann. Die Fußauflage weist eine auf einem Schlitten angeordnete Plattform auf, auf welcher der Fuß aufgestellt werden kann. Der Schlitten ist auf einer Gleitschiene hin und her verschiebbar.

Die Erfindung hat die Aufgabe, eine Fußstütze der eingangs genannten Art dahingehend zu verbessern, dass ihr Aufbau vereinfacht und kostengünstiger wird.

Die Erfindung löst die gestellte Aufgabe mit einer gattungsgemäßen Fußstütze mit den Merkmalen des Anspruchs 1. Auf diese Weise wird ein auf der Fußauflage abgestellter Fuß eines Fahrzeuginsassen von einem Aufprallbereich wegbewegt. Diese Konstruktion ist grundsätzlich einfach und somit kostengünstig.

Die Führungsnut kann im Basisteil vorgesehen sein. Die Fußauflage kann mit der Gleitschiene ausgerüstet sein, welche formschlüssig in die Führungsnut eingreifen kann. Es ist jedoch auch möglich, die Führungsnut in der Fußauflage und die Gleitschiene im Basisteil vorzusehen.

Die Führungsnut und die darin eingreifende Gleitschiene können zweckmäßigerweise in Fahrzeuglängsrichtung (gemeinhin als x-Richtung bezeichnet) angeordnet sein. Dann wird insbesondere bei einem frontalen Aufprall die Verletzungsgefahr für den Fahrzeuginsassen reduziert, indem die Fußstütze mit dem darauf abgestellten Fuß in Richtung des Fahrzeughecks bewegt wird.

Das Basisteil kann vorteilhafterweise an einer Fahrzeugkarosserie befestigt werden, vorzugsweise in Ihrem Bodenbereich. Damit soll sichergestellt werden, dass das Basisteil auch während des Aufpralls seine Position relativ zur Fahrzeugkarosserie behält.

Um sicherzustellen, dass die Fußauflage erst ab einem bestimmten kritischen Impuls relativ zum Basisteil bewegt wird, können das Basisteil und die Fußauflage durch einen Presssitz zwischen der Führungsnut und der Gleitschiene miteinander verbunden sein.

Die Führungsnut kann sich von ihrer Nutöffnung hin zum Nutgrund verbreitern. Ferner kann die Gleitschiene einen daran angepassten Querschnitt aufweisen, so dass zwischen der Führungsnut und der Führungsschiene eine formschlüssige, einen Hinterschnitt aufweisende Verbindung entstehen kann. Folglich ist die Gleitschiene daran gehindert, senkrecht zur Bewegungsrichtung der Fußauflage aus der Nutöffnung der Führungsnut herauszugleiten.

Vorteilhaft kann eine hakenförmige Ausformung der Fußauflage das Basisteil fahrzeugheckseitig übergreifen. Die hakenförmige Ausformung verhindert eine Bewegung der Fußauflage relativ zum Basisteil in Richtung des Fahrzeugbugs über die unbeeinflusste Position der Fußauflage (also über die anfängliche Position der Fußauflage ohne Crashaufprall des Fahrzeugs) hinaus.

Aufgrund der erfindungsgemäßen Anordnung zwischen dem Basisteil und der Fußauflage muss die Fußstütze nicht an einem Radkasten positioniert werden. Sie kann bevorzugterweise vor einer Wandung platziert sein, welche beispielsweise als sogenannte Spritzwand einen Fahrzeuginnenraum und einen Motorraum voneinander trennt. Dies ist besonders dann vorteilhaft, wenn das Fahrzeug eine Rechtslenkung aufweist, da sich in einem solchen Fall der Radkasten rechts befindet und somit nicht für die im Regelfall links anzuordnende Fußstütze zur Verfügung steht. Die Fußstütze eignet sich jedoch auch für ein Fahrzeug mit einer Linkslenkung. Sie kann dann nicht nur auf der Fahrerseite, sondern auch auf der Beifahrerseite platziert werden.

Damit bei einem Unfall genügend Platz für eine Verformung der Wandung gegeben ist, kann zwischen dem Basisteil und der Wandung ein Abstand vorgesehen sein. Ferner kann zwischen der Fußauflage und der Wandung mindestens ein Absorptionselement angeordnet sein. Bei einer Verformung der Wandung wird das Absorptionselement in der Folge ebenfalls verformt, bevor die Fußauflage relativ zum Basisteil verschoben wird. Auf diese Weise kann das mindestens eine Absorptionselement Verformungsenergie aufnehmen und eine schlagartige Beschleunigung der Fußauflage reduzieren.

Die Fußstütze lässt sich kostengünstig realisieren, wenn sie und/oder das Basisteil aus einem geschäumten Material hergestellt werden. Zu diesem Zweck bietet sich beispielsweise ein Partikelschaum aus einem expandierten Polypropylen oder aus einem expandierten Polystyrol an. Es ist auch ein Hartschaum auf der Basis eines Polyurethans denkbar oder bei einer geeigneten Konstruktion ein metallischer Werkstoff oder ein nicht geschäumter Kunststoff.

Das Basisteil und die Fußauflage können bereits vor einer Fahrzeugendmontage miteinander verbunden werden, so dass die Fußstütze bereits vormontiert der Fahrzeugendmontage zugeführt werden kann.

Um das Basisteil in der Fahrzeugendmontage mit wenigen Handgriffen rasch an der Fahrzeugkarosserie befestigen zu können, kann es mit Clipsen und/oder Druckknöpfen an der Fahrzeugkarosserie befestigt werden. Auf diese Weise können Schrauben und ähnliche Verbindungsmittel entfallen. Dies spart Kosten und Zeit. Selbstverständlich können aber auch andere geeignete Befestigungselemente verwendet werden, einschließlich einer Befestigung durch Verkleben.

Aus optischen Gründen kann die Fußstütze mit einer Bodenabdeckung, beispielsweise mit einem Teppich, überzogen werden.

Nachfolgend werden zwei Ausführungsbeispiele der erfindungsgemäßen Fußstütze anhand der beiliegenden Zeichnungen näher erläutert.

Im Einzelnen zeigen:
- Fig. 1: eine perspektivische Ansicht auf ein erstes Ausführungsbeispiel einer Fußstütze vor einem Crashaufprall des Fahrzeugs;
- Fig. 2: eine perspektivische Ansicht auf die Fußstütze der Fig. 1 nach einem Crashaufprall;
- Fig. 3: eine perspektivische Ansicht auf ein zweites Ausführungsbeispiel einer Fußstütze vor einem Crashaufprall des Fahrzeugs.

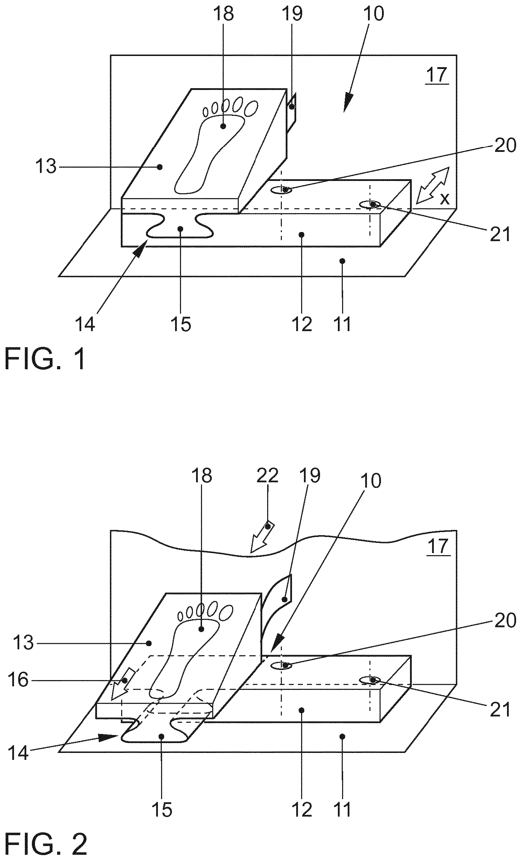

Die Fign. 1 und 2 zeigen eine Fußstütze 10 mit einem an einer Fahrzeugkarosserie 11 befestigten Basisteil 12. Auf dem Basisteil 12 ist eine relativ dazu verschiebbare Fußauflage 13 angeordnet. Die Blickrichtung des Betrachters der Fign. 1 und 2 ist im Wesentlichen in Fahrzeuglängsrichtung in die normale Fahrtrichtung des Fahrzeugs, also in Richtung des Fahrzeugbugs (gemeinhin als -x-Richtung bezeichnet), gerichtet.

Die Fußstütze 10 ist mit einem bestimmten Abstand X vor einer Wandung 17 angeordnet (siehe Fig. 1). Die Wandung 17 trennt als sogenannte Spritzwand einen Fahrzeuginnenraum und einen Motorraum des Kraftfahrzeugs voneinander.

Damit die Fußauflage 13 relativ zum Basisteil 12 verschoben werden kann, weist das Basisteil 12 eine Führungsnut 14 und die Fußauflage 13 eine Gleitschiene 15 auf. Die Führungsnut 14 und die Gleitschiene 15 sind in Fahrzeuglängsrichtung (gemeinhin als x-Richtung bezeichnet) angeordnet, so dass die Fußauflage 13 mit der Gleitschiene 15 in Fahrzeuglängsrichtung entlang dem Basisteil 12 in der Führungsnut 14 gleiten kann.

Bei einem in Richtung eines Pfeiles 22 wirkenden Aufprall des Fahrzeugs bewegt sich die Fußauflage 13 in Richtung eines Pfeils 16 vom Aufprallbereich weg. Ein auf der Fußauflage 13 abgestellter Fuß 18 wird somit ebenfalls in Richtung des Pfeils 16 vom Aufprallbereich weg in einen sichereren Bereich im Fahrzeuginnenraum bewegt.

Die Führungsnut 14 verbreitert sich im Querschnitt von ihrer Nutöffnung hin zu ihrem Nutgrund. Der Querschnitt der Gleitschiene 15 ist an den Querschnitt der Führungsnut 14 angepasst. Auf diese Weise ist zwischen der Führungsnut 14 und der Gleitschiene 15 eine formschlüssige, einen Hinterschnitt aufweisende Verbindung realisiert. Dadurch kann die Gleitschiene 15 bei einem Unfall nicht senkrecht zur Bewegungsrichtung der Fußauflage 13 aus der Nutöffnung der Führungsnut 14 herausgleiten.

An der Fußauflage 13 ist ein Absorptionselement 19 angeordnet. Bei einem Unfallcrash, insbesondere bei einem frontalen Aufprall, wird die Wandung 17 in Richtung der Fußstütze 10 verformt. Dabei wird in der Folge auch das Absorptionselement 19 verformt (siehe Fig. 2). Erst wenn die Verformung des Absorptionselements 19 einen bestimmten Grad beziehungsweise wenn infolge der Verformung ein auf die Fußauflage 13 übertragener Impuls einen kritischen Wert erreicht hat, wird die Fußauflage 13 relativ zum Basisteil 12 in Richtung des Pfeils 16 verschoben. Durch das Absorptionselement 19 kann somit Verformungsenergie aufgenommen und die Beschleunigung der Fußauflage 13 reduziert werden.

Damit sichergestellt wird, dass die Fußauflage 13 erst ab dem bestimmten kritischen Impuls relativ zum Basisteil 12 bewegt wird, sind das Basisteil 12 und die Fußauflage 13 durch einen Presssitz zwischen der Führungsnut 14 und der Gleitschiene 15 miteinander verbunden.

Das Basisteil 12 weist Öffnungen 20 und 21 auf, durch die Befestigungsmittel gesteckt werden können, um das Basisteil 12 an der Fahrzeugkarosserie 11 zu befestigen. Die Befestigungsmittel können beispielsweise Clipsverbinder sein. Grundsätzlich sind jedoch auch Schrauben oder Niete oder Klebebänder oder vergleichbare Befestigungsmittel möglich.

Aus Gründen der optischen Gefälligkeit kann die Fußstütze 10 mit einer hier nicht näher dargestellten Bodenabdeckung abgedeckt werden.

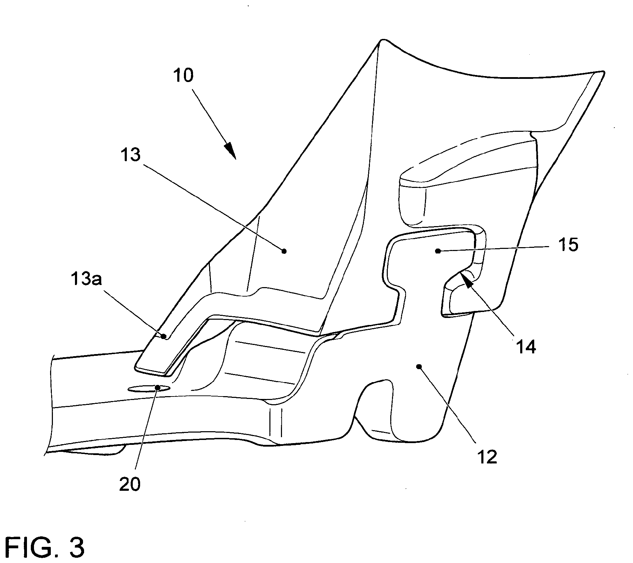

Fig. 3 zeigt ein zweites Ausführungsbeispiel einer Fußstütze. Die Blickrichtung des Betrachters der Fig. 3 ist im Wesentlichen in Fahrzeuglängsrichtung entgegen der normalen Fahrtrichtung des Fahrzeugs, also in Richtung des Fahrzeughecks (gemeinhin als +x-Richtung bezeichnet), gerichtet. Teile, die denjenigen des ersten Ausführungsbeispiels der Fign. 1 und 2 entsprechen, sind mit gleichen Bezugszeichen versehen.

Die Fußstütze 10 der Fig. 3 umfasst ein an einer (nicht zeichnerisch dargestellten) Karosserie eines Kraftfahrzeugs befestigbares Basisteil 12 sowie eine relativ dazu verschiebbare Fußauflage 13. Eine Öffnung 20 im Basisteil 12 dient der Befestigung des Basisteils 12 an der Karosserie mittels durch die Öffnung 20 hindurchsteckbarer Befestigungsmittel.

Im Unterschied zum ersten Ausführungsbeispiel ist bei dem Ausführungsbeispiel der Fig. 3 die Führungsnut 14 in der Fußauflage 13 angeordnet, und die Gleitschiene 15 ist am Basisteil 12 angeordnet. Die Führungsnut 14 und die Gleitschiene 15 sind wie bei dem ersten Ausführungsbeispiel in Fahrzeuglängsrichtung (x-Richtung) angeordnet, so dass die Fußauflage 13 mit der Führungsnut 14 in Fahrzeuglängsrichtung entlang dem Basisteil 12 mit der Gleitschiene 15 gleiten kann. Eine hakenförmige Ausformung 13a der Fußauflage 13, die das Basisteil 12 fahrzeugheckseitig übergreift, gestattet dabei, dass sich die Fußauflage 13 relativ zum Basisteil 12 entgegen der normalen Fahrtrichtung des Fahrzeugs, also in +x-Richtung in Richtung des Fahrzeughecks, verschiebt, verhindert aber eine Bewegung der Fußauflage 13 relativ zum Basisteil 12 in Richtung der normalen Fahrtrichtung des Fahrzeugs, also in -x-Richtung in Richtung des Fahrzeugbugs, über die in Fig. 3 gezeigte Position hinaus. Gleichzeitig entsteht durch die hakenförmige Ausformung 13a eine einteilige Fußabstellfläche an der Fußauflage 13, und die Gleitschiene 15 am Basisteil 12 bleibt dem Fahrzeuginsassen visuell verborgen.

Die Funktionsweise und die Vorteile dieses zweiten Ausführungsbeispiels entsprechen ansonsten dem ersten Ausführungsbeispiel der Fign. 1 und 2. Das Basisteil 12 und die Fußauflage 13 bestehen bei diesem Ausführungsbeispiel aus Polypropylen-Partikelschaumstoff mit einer Dichte von circa 35 kg/m³.

### Bezugszeichenliste

- 10: Fußstütze
- 11: Karosserie
- 12: Basisteil
- 13: Fußauflage
- 13a: hakenförmige Ausformung
- 14: Führungsnut
- 15: Gleitschiene
- 16: Pfeil
- 17: Wandung, insbesondere Spritzwand
- 18: Fuß
- 19: Absorptionselement
- 20: Öffnung
- 21: Öffnung
- 22: Pfeil

## Patentansprüche

1. Fußstütze (10) für ein Kraftfahrzeug zum Abstützen eines Fußes (18) eines Fahrzeuginsassen, mit einem Basisteil (12) und einer Fußauflage (13), wobei die Fußauflage (13) relativ zum Basisteil (12) bei einem Unfall verschiebbar ist, **dadurch gekennzeichnet, dass** das Basisteil (12) und die Fußauflage (13) durch eine in einer Führungsnut (14) geführte Gleitschiene (15) verschiebbar zueinander angeordnet sind.

2. Fußstütze (10) nach dem vorhergehenden Anspruch, **dadurch gekennzeichnet, dass** sich die Führungsnut (14) von ihrer Nutöffnung hin zum Nutgrund verbreitert.

3. Fußstütze (10) nach einem der vorhergehenden Ansprüche, **dadurch gekennzeichnet, dass** die Führungsnut (14) einen Hinterschnitt aufweist.

4. Fußstütze (10) nach einem der vorhergehenden Ansprüche, **dadurch gekennzeichnet, dass** die Fußstütze (10) vor einer Wandung (17), insbesondere vor einer Spritzwand, des Fahrzeugs platziert ist.

5. Fußstütze (10) nach Anspruch 4, **dadurch gekennzeichnet, dass** zwischen der Fußauflage (13) und der Wandung (17) mindestens ein Absorptionselement (19) vorgesehen ist.

6. Fußstütze (10) nach einem der vorhergehenden Ansprüche, **dadurch gekennzeichnet, dass** die Fußauflage (13) und/oder das Basisteil (12) aus einem geschäumten Material herstellbar ist.

7. Fußstütze (10) nach einem der vorhergehenden Ansprüche, **dadurch gekennzeichnet, dass** sie vormontierbar ist.

8. Fußstütze (10) nach einem der vorhergehenden Ansprüche, **dadurch gekennzeichnet, dass** das Basisteil (12) an einer Fahrzeugkarosserie (11) befestigt oder befestigbar ist.

9. Fußstütze (10) nach Anspruch 8, **dadurch gekennzeichnet, dass** das Basisteil (12) mit Clipsen und/oder Druckknöpfen an der Fahrzeugkarosserie (11) befestigt oder befestigbar ist.

10. Fußstütze (10) nach einem der vorhergehenden Ansprüche, **dadurch gekennzeichnet, dass** das Basisteil (12) und die Fußauflage (13) durch einen Presssitz zwischen der Führungsnut (14) und der Gleitschiene (15) miteinander verbunden sind.

11. Fußstütze (10) nach einem der vorhergehenden Ansprüche, **dadurch gekennzeichnet, dass** die Führungsnut (14) in Fahrzeuglängsrichtung angeordnet ist.

12. Fußstütze (10) nach einem der vorhergehenden Ansprüche, **dadurch gekennzeichnet, dass** die Fußauflage (13) mit einer hakenförmigen Ausformung (13a) das Basisteil (12) übergreift, insbesondere fahrzeugheckseitig übergreift.

13. Fußstütze (10) nach einem der vorhergehenden Ansprüche, **dadurch gekennzeichnet, dass** die Fußstütze (10) mit einer Bodenabdeckung überzogen ist.

## Claims

1. Foot rest (10) for a motor vehicle for supporting a foot (18) of a vehicle occupant, having a base part (12) and a foot support (13), wherein the foot support (13) is displaceable relative to the base part (12) in the event of an accident, **characterized in that** the base part (12) and the foot support (13) are arranged to be displaceable relative to one another by means of a slide rail (15) guided in a guide groove (14).

2. Foot rest (10) according to the preceding claim, **characterized in that** the guide groove (14) widens from its groove opening towards the groove bottom.

3. Foot rest (10) according to one of the preceding claims, **characterized in that** the guide groove (14) has an undercut.

4. Foot rest (10) according to one of the preceding claims, **characterized in that** the foot rest (10) is positioned in front of a wall (17) - in particular, in front of a bulkhead - of the vehicle.

5. Foot rest (10) according to claim 4, **characterized in that** at least one absorption element (19) is provided between the foot support (13) and the wall (17).

6. Foot rest (10) according to one of the preceding claims, **characterized in that** the foot support (13) and/or the base part (12) can be produced from a foamed material.

7. Foot rest (10) according to one of the preceding claims, **characterized in that** it can be pre-assembled.

8. Foot rest (10) according to one of the preceding claims, **characterized in that** the base part (12) is fastened or can be fastened to a vehicle body (11).

9. Foot rest (10) according to claim 8, **characterized in that** the base part (12) is fastened or can be fastened to the vehicle body (11) with clips and/or pushbuttons.

10. Foot rest (10) according to one of the preceding claims, **characterized in that** the base part (12) and the foot support (13) are connected to one another by a press fit between the guide groove (14) and the slide rail (15).

11. Foot rest (10) according to one of the preceding claims, **characterized in that** the guide groove (14) is arranged in the longitudinal direction of the vehicle.

12. Foot rest (10) according to one of the preceding claims, **characterized in that** the foot support (13) fits over the base part (12) - in particular, towards the rear of the vehicle - with a hook-shaped formation (13a).

13. Foot rest (10) according to one of the preceding claims, **characterized in that** the foot rest (10) is covered with a floor covering.

## Revendications

1. Repose-pied (10) pour véhicule automobile destiné à soutenir un pied (18) d'un passager du véhicule, comprenant une partie de base (12) et un support pour pied (13), le support pour pied (13) pouvant être déplacé par rapport à la partie de base (12) lors d'un accident, **caractérisé en ce que** la partie de base (12) et le support pour pied (13) sont disposés de façon à pouvoir être déplacés l'un par rapport à l'autre au moyen d'une glissière (15) guidée dans une rainure de guidage (14).

2. Repose-pied (10) selon la revendication précédente, **caractérisé en ce que** la rainure de guidage (14) s'élargit de son ouverture de rainure au fond de la rainure.

3. Repose-pied (10) selon l'une quelconque des revendications précédentes, **caractérisé en ce que** la rainure de guidage (14) présente une contre-dépouille.

4. Repose-pied (10) selon l'une quelconque des revendications précédentes, **caractérisé en ce que** le repose-pied (10) est placé devant une paroi (17), en particulier devant un tablier, du véhicule.

5. Repose-pied (10) selon la revendication 4, **caractérisé en ce qu'au** moins un élément d'absorption (19) est prévu entre le support pour pied (13) et la paroi (17).

6. Repose-pied (10) selon l'une quelconque des revendications précédentes, **caractérisé en ce que** le support pour pied (13) et/ou la partie de base (12) peuvent être fabriqués en un matériau expansé.

7. Repose-pied (10) selon l'une quelconque des revendications précédentes, **caractérisé en ce qu'**il peut être prémonté.

8. Repose-pied (10) selon l'une quelconque des revendications précédentes, **caractérisé en ce que** la partie de base (12) est ou peut être fixée à une carrosserie de véhicule (11).

9. Repose-pied (10) selon la revendication 8, **caractérisé en ce que** la partie de base (12) est ou peut être fixée à la carrosserie de véhicule (11) au moyen d'agrafes et/ou de boutons-pression.

10. Repose-pied (10) selon l'une quelconque des revendications précédentes, **caractérisé en ce que** la partie de base (12) et le support pour pied (13) sont reliés l'un à l'autre par un ajustement serré entre la rainure de guidage (14) et la glissière (15).

11. Repose-pied (10) selon l'une quelconque des revendications précédentes, **caractérisé en ce que** la rainure de guidage (14) est disposée dans le sens de la longueur du véhicule.

12. Repose-pied (10) selon l'une quelconque des revendications précédentes, **caractérisé en ce que** le support pour pied (13) chevauche la partie de base (12) grâce à un façonnage en forme de crochet (13a), la chevauchant en particulier côté arrière du véhicule.

13. Repose-pied (10) selon l'une quelconque des revendications précédentes, **caractérisé en ce que** le repose-pied (10) est recouvert d'un revêtement de sol.
